# EUROPEAN PATENT APPLICATION

(11) **EP 4 817 407 A1**
(43) Date of publication of application: **07.10.2026**
(21) Application number: 25182197.1
(22) Date of filing: 12.06.2025
(51) Int. Cl.: A01G 20/47

(54) **HANDHELD BLOWER VACUUM**

(30) Priority: 31.03.2025 CN 202510401963
(71) Applicant: Nanjing Chervon Industry Co., Ltd., Nanjing, Jiangsu 211106 (CN)
(72) Inventor: QI, Qin, Nanjing (CN); GUO, Jianpeng, Nanjing (CN)
(74) Representative: Sun, Yiming

(57) **Abstract**

A handheld blower vacuum (100) includes a body (110); a pipe assembly (120) having a horizontal center plane (125); and a bag assembly (130) detachably connected to the pipe assembly. The bag assembly includes a collection bag (131) and a bag connecting portion (132) disposed on the collection bag. The pipe assembly is connected to or formed with a mounting portion (122), and the mounting portion is disposed in a region below the horizontal center plane of the pipe assembly. Moreover, at least part of the bag connecting portion extends around the pipe assembly, passes over the pipe assembly, and is detachably connected to the mounting portion.

## Description

### TECHNICAL FIELD

The present disclosure relates to an outdoor garden tool, for example, a handheld blower vacuum.

### BACKGROUND

A blower vacuum in the related art is a common electric outdoor garden tool mainly used for cleaning and collecting rubbish such as leaves. The blower vacuum usually has a blowing mode and a suction mode. In the blowing mode, the blower vacuum blows air outwards to gather the leaves scattered on the ground. In the suction mode, the blower vacuum generates a suction force and mates with a collection device to suck the leaves into the collection device, thereby avoiding manual cleaning and saving manpower and time.

In the existing blower vacuum, a collection bag is often fixed directly to the body of the blower vacuum by a zipper or a tie strip. If the capacity of the collection bag is relatively large, the collection bag easily drags on the ground and is scratched, affecting the service life of the collection bag. In addition, the fixing manner using the zipper or tie strip makes it more time-consuming for the user to mount or remove the collection bag.

This part provides background information related to the present application, and the background information is not necessarily the existing art.

### SUMMARY

An object of the present application is to solve or at least alleviate part or all of the preceding problems. Therefore, an object of the present application is to provide a handheld blower vacuum with higher safety.

To achieve the preceding object, the present application adopts the technical solutions below.

A handheld blower vacuum includes a body; a pipe assembly having a horizontal center plane; and a bag assembly detachably connected to the pipe assembly. The bag assembly includes a collection bag and a bag connecting portion disposed on the collection bag. The pipe assembly is connected to or formed with a mounting portion, and the mounting portion is disposed in a region below the horizontal center plane of the pipe assembly. Moreover, at least part of the bag connecting portion extends around the pipe assembly, passes over the pipe assembly, and is detachably connected to the mounting portion.

In an example, the bag connecting portion and the collection bag are integrally formed or detachably connected.

In an example, the mounting portion is disposed at the bottom of the pipe assembly or on the side surface of the pipe assembly.

In an example, the pipe assembly is in contact with the bag connecting portion.

In an example, the bag connecting portion includes a first part and a second part, the first part is connected to the collection bag, and the second part is connected to the mounting portion.

In an example, the second part and the first part are detachably connected.

In an example, the first part includes a connection strap, and the second part includes a ring connector.

In an example, the mounting portion includes a hook connector.

In an example, the connection strap is a hanging strap, the ring connector is a hanging ring, and the hook connector is a hook.

In an example, the bag connecting portion is distributed around more than 1/3 of the circumference of the pipe assembly.

In an example, the bag connecting portion is distributed around more than 1/2 of the circumference of the pipe assembly.

In an example, the bag connecting portion is distributed around more than a circumference of the pipe assembly. In an example, the capacity of the collection bag is greater than or equal to 40 L.

In an example, when the handheld blower vacuum is at an operating position, the distance from the bottom of the collection bag to the ground is greater than or equal to 5 cm.

The present application further provides a technical solution. A handheld blower vacuum includes: a body; a pipe assembly having a horizontal center plane and a vertical center plane; and a bag assembly detachably connected to the pipe assembly. The bag assembly includes a collection bag and a bag connecting portion disposed on the collection bag. The pipe assembly is connected to or formed with a mounting portion detachably connected to the bag connecting portion, and the mounting portion is disposed in a region below the horizontal center plane of the pipe assembly. When the handheld blower vacuum is at an operating position, the collection bag is at least partially located above the horizontal center plane of the pipe assembly.

The present application further provides a technical solution.

A handheld blower vacuum includes: a body; a pipe assembly having a horizontal center plane and a vertical center plane; and a bag assembly detachably connected to the pipe assembly. The bag assembly includes a collection bag and a bag connecting portion disposed on the collection bag. The pipe assembly is connected to or formed with a mounting portion detachably connected to the bag connecting portion, and the mounting portion is disposed in a region below the horizontal center plane of the pipe assembly. Moreover, the bag connecting portion includes a first end connected to the collection bag and a second end connected to the mounting portion. When the handheld blower vacuum is at an operating position, the first end and the second end are located on two sides of the vertical center plane.

In an example, the pipe assembly is in contact with the bag connecting portion.

In an example, the capacity of the collection bag is greater than or equal to 30 L.

In an example, when the handheld blower vacuum is at the operating position, the distance from the bottom of the collection bag to the ground is greater than or equal to 2 cm.

The present application has the benefits below. The bag connecting portion passes over the pipe assembly and is hooked onto the mounting portion of the pipe assembly so that the collection bag is raised as far away from the ground as possible, thereby avoiding the following: the bottom of the collection bag drags on the ground and is scratched, affecting the service life of the collection bag. In addition, the ergonomics is better and there is space to make the capacity of the collection bag larger.

### BRIEF DESCRIPTION OF DRAWINGS

To illustrate technical solutions in examples of the present application more clearly, the drawings used in the description of the examples are briefly described below. Apparently, the drawings described below illustrate only part of the examples of the present application, and those of ordinary skill in the art may obtain other drawings based on the drawings described below on the premise that no creative work is done.
FIG. 1 is a structural view of a handheld blower vacuum according to an example of the present application.
FIG. 2 is a side view of the handheld blower vacuum in FIG. 1.
FIG. 3 is an enlarged view of part A of FIG. 1.
FIG. 4 is a structural view of the handheld blower vacuum in FIG. 1 at an operating position.
FIG. 5 is a front view of another handheld blower vacuum according to an example of the present application.
FIG. 6 is a side view of the handheld blower vacuum in FIG. 5.
FIG. 7 is a structural view of another handheld blower vacuum according to an example of the present application.
FIG. 8 is a structural view of another handheld blower vacuum according to an example of the present application.
FIG. 9 is a structural view of another handheld blower vacuum according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The technical solutions of the present application may be applied to a handheld blower vacuum and may also be applied to a handheld blower. In the examples of the present application, the handheld blower vacuum is used as an example.

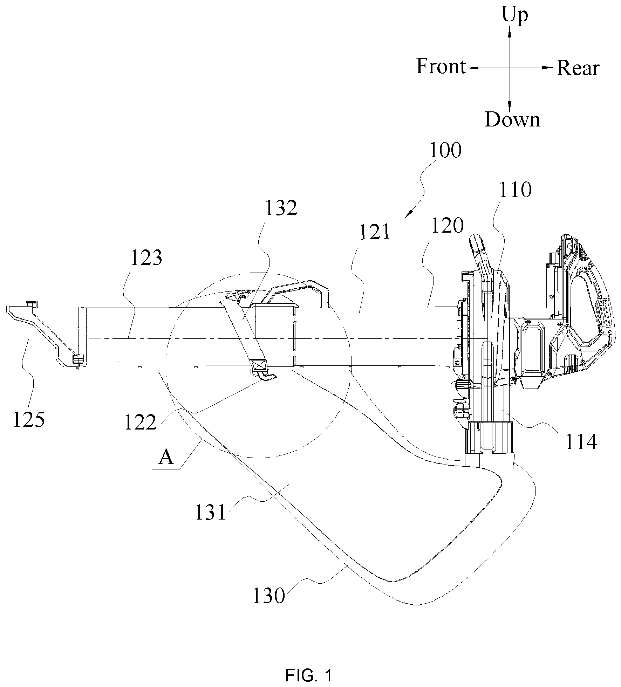

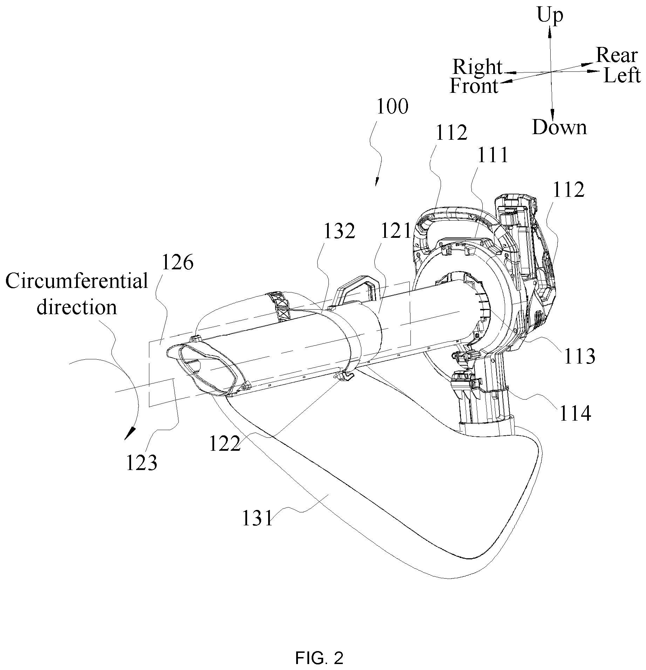

FIG. 1 is a structural view of a handheld blower vacuum according to an example of the present application. FIG. 2 is a side view of the handheld blower vacuum in FIG. 1. To clearly illustrate the technical solutions of the present application, the directions such as front, rear, left, right, up, and down as shown in FIG. 2 are defined. As shown in FIGS. 1 and 2, a handheld blower vacuum 100 introduced in the example of the present application is a handheld garden blower vacuum that may be used for blowing away and sucking up fallen leaves and dust on roads and in gardens, and the handheld blower vacuum 100 may also be considered as a handheld leaf blower vacuum. The handheld blower vacuum 100 includes at least a body 110, a pipe assembly 120, and a bag assembly 130. The body 110 is used for implementing a blowing and suction function, the bag assembly 130 is detachably connected to the pipe assembly 120, the pipe assembly 120 includes a suction cylinder 121, and the bag assembly 130 includes a collection bag 131. When the handheld blower vacuum 100 is in a suction mode, the body 110 implements a suction function, and the sucked objects are sucked in through the suction cylinder 121 and enter the collection bag 131 so that after the collection is completed, it is convenient to dump the sucked objects.

The body 110 includes at least a housing 111, an electric motor, a fan assembly, a cutting assembly, and a control board. As shown in FIGS. 1 and 2, a handle 112 for a user to hold is formed at the rear end and on the upper part of the housing 111. The electric motor, the fan assembly, the cutting assembly, and the control board are accommodated in the housing 111. The control board is electrically connected to the electric motor to control the start and stop and the working mode of the electric motor. The fan assembly is driven by the electric motor to generate the airflow to implement the blowing and suction function. The cutting assembly is driven by the electric motor to cut the sucked objects. The housing 111 has an air suction port 113 and an air blowing port 114. The air suction port 113 is arranged corresponding to the fan assembly. The suction cylinder 121 is detachably mounted at the air suction port 113, and the collection bag 131 is detachably mounted at the air blowing port 114. The electric motor may be a brushless motor. When the handheld blower vacuum 100 is in the suction mode, the electric motor drives the machine to implement the suction function, and the sucked objects are sucked in through the suction cylinder 121, reach the cutting assembly through the air suction port 113, are cut, and then enter the collection bag 131 through the air blowing port 114 so that after the collection is completed, it is convenient to dump the sucked objects.

The handheld blower vacuum 100 further includes a blowing assembly. The blowing assembly includes a blowing cylinder. The blowing cylinder is detachably mounted at the air blowing port 114. After the blowing cylinder is mounted, when the handheld blower vacuum 100 operates in a blowing mode, the airflow is blown out from the blowing cylinder to collect the scattered leaves and the like.

The body 110 further includes a power supply for supplying power to the electric motor, the control board, and the fan assembly. The power supply may be a direct current power supply or an alternating current power supply. The direct current power supply includes a battery pack or other devices that can provide direct current power.

As shown in FIGS. 1 and 2, the pipe assembly 120 has a horizontal center plane 125 extending horizontally along an axis 123, the pipe assembly 120 is connected to or formed with a mounting portion 122, and the mounting portion 122 is disposed in a region below the horizontal center plane 125 of the pipe assembly 120. The bag assembly 130 further includes a bag connecting portion 132 disposed on the collection bag 131. At least part of the bag connecting portion 132 extends along a surrounding direction around the pipe assembly 120, goes around the top of the pipe assembly 120, and is detachably connected to the mounting portion 122.

When the user uses the handheld blower vacuum 100, the bag connecting portion 132 passes over the pipe assembly 120 along the surrounding direction and is connected to the mounting portion 122 located in a region below the pipe assembly 120. The mounting portion 122 provides a support force to suspend and raise the collection bag 131 as far away from the ground as possible so that the bottom of the collection bag 131 is prevented from dragging on the ground and getting scratched, and the service life of the collection bag 131 is not affected. In addition, the ergonomics is better and there is space to make the capacity of the collection bag 131 larger.

Moreover, by arranging the mounting portion 122 in the region below the pipe assembly 120, that is, by setting the suspension point between the bag connecting portion 132 and the mounting portion 122 in the region below the pipe assembly 120, the stress transfer effect of the mounting portion 122 is improved. If the mounting portion is disposed in other regions of the pipe assembly, either the stress transfer effect of the mounting portion is not good, or the collection bag drags on the ground, especially when the collection bag has a large capacity. Therefore, the solution of the present application can not only solve the stress transfer problem of the mounting portion 122 but also solve the problem that the collection bag 131 drags on the ground.

As shown in FIG. 2, the surrounding direction of the pipe assembly 120 refers to a direction around the central axis 123 along the surface of the pipe assembly 120. Specifically, the central axis 123 of the pipe assembly 120 is also the central axis 123 of the suction cylinder 121. The surrounding direction includes a circumferential direction around the central axis 123 of the suction cylinder 121 and also includes a spiral direction that is inclined forward and backward around the central axis 123.

The bag connecting portion 132 is around the pipe assembly 120 so that the collection bag 131 is at least partially located above the horizontal center plane 125. In some examples, the collection bag 131 is at least partially located above the pipe assembly 120.

The pipe assembly 120 has the horizontal center plane 125 extending along the length direction, and the central axis 123 is located in the horizontal center plane 125. The horizontal center plane 125 divides the pipe assembly 120 into an upper part and a lower part, and the mounting portion 122 is disposed at the bottom or on the side surface of the region below the horizontal center plane 125 of the pipe assembly 120. The mounting portion 122 includes a hook connector 1221. The hook connector 1221 and the pipe assembly 120 may be integrally formed. Alternatively, the hook connector 1221 may be detachably mounted on the pipe assembly 120 to facilitate the replacement and maintenance of the hook connector 1221. For example, as shown in FIGS. 1 to 3, the hook connector 1221 is injection-moulded on the suction cylinder 121, and the hook connector 1221 is fixed at the lowest point of the suction cylinder 121 in the vertical direction. In an example, the hook connector 1221 may be mounted on the suction cylinder 121 via a fixing member. In an example, the hook connector 1221 may be fixed on the side surface of the region below the horizontal center plane 125 of the suction cylinder 121. Specifically, the hook connector 1221 may be fixed on the left side surface or the right side surface of the region below the suction cylinder 121.

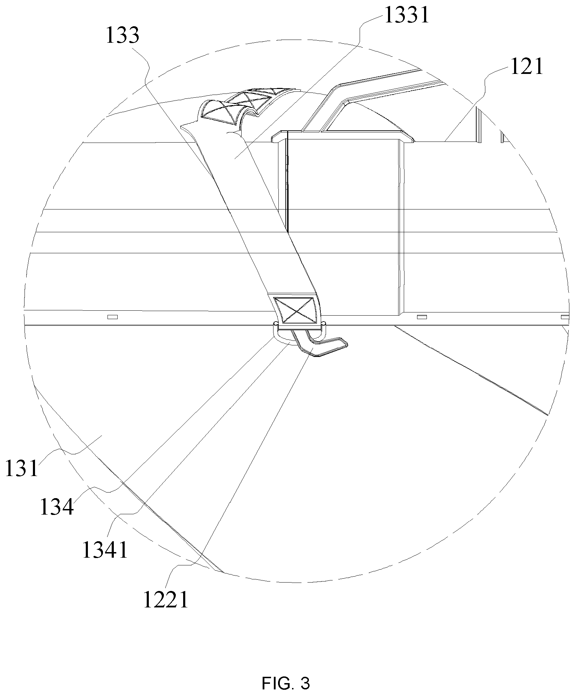

The bag connecting portion 132 and the collection bag 131 may be integrally formed. Alternatively, the bag connecting portion 132 and the collection bag 131 may be detachably connected so that the bag connecting portion 132 is easy to replace and repair after being worn. Specifically, as shown in FIG. 3, the bag connecting portion 132 includes a first part 133 and a second part 134, the first part 133 is connected to the collection bag 131, and the second part 134 is connected to the mounting portion 122. The second part 134 and the first part 133 are fixedly or detachably connected. The first part 133 includes a connection strap 1331, and the second part 134 includes a ring connector 1341. An end of the connection strap 1331 is fixedly connected to the collection bag 131, and the other end of the connection strap 1331 is connected to the ring connector 1341. The ring connector 1341 and the hook connector 1221 form a detachable connection structure and may be conveniently mounted and disassembled, thereby making it convenient for the user to dump the sucked objects in the collection bag 131.

When the user uses the handheld blower vacuum 100 at an operating position, as shown in FIGS. 1 to 3, the other end of the connection strap 1331 goes around the top of the suction cylinder 121 in the surrounding direction, the ring connector 1341 is hooked onto the hook connector 1221 of the suction cylinder 121, and the connection strap 1331 at least partially forms a surface contact (including direct contact or indirect contact) with the suction cylinder 121 so that the suction cylinder 121 and the hook connector 1221 jointly provide a support force so that the collection bag 31 with a larger capacity can be supported and raised as far away from the ground as possible.

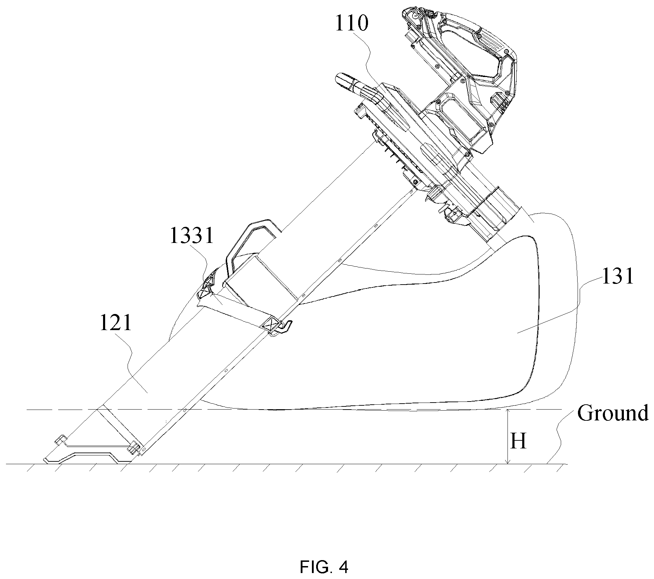

FIG. 4 is a structural view of the handheld blower vacuum in FIG. 1 at an operating position. The operating position refers to the state in which the user uses the handheld blower vacuum to operate in the suction mode, for example, to collect fallen leaves. As shown in FIG. 4, when the handheld blower vacuum 100 is at the operating position, the suction cylinder 121 is at an inclined position, the air inlet is adjacent to the ground to collect fallen leaves, and the collection bag 131 is suspended on the suction cylinder 121 and is away from the ground. H denotes the distance from the bottom of the collection bag 131 to the ground. When the handheld blower vacuum 100 is at the operating position, the distance H from the bottom of the collection bag 131 to the ground is greater than 0 cm. The bottom of the collection bag 131 refers to the lowest point of the collection bag 131 in a direction perpendicular to the ground. In some examples, the distance H is greater than or equal to 1 cm. In some examples, the distance H is greater than or equal to 2 cm. In some examples, the distance H is greater than or equal to 5 cm. In some examples, the distance H is greater than or equal to 10 cm. In some examples, the distance H is greater than or equal to 20 cm. The distance H is usually measured when there are no fallen leaves or other collected objects in the collection bag 131 when the handheld blower vacuum 100 is at the operating position. In this case, the air inlet of the suction cylinder 121 is basically in contact with the ground, and the bottom of the collection bag 131 is roughly parallel to the ground.

In an example, the capacity of the collection bag 131 is greater than or equal to 30 L. In an example, the capacity of the collection bag 131 is greater than or equal to 40 L. In an example, the capacity of the collection bag 131 is greater than or equal to 50 L. In an example, the capacity of the collection bag 131 is greater than or equal to 60 L.

In this example, as shown in FIGS. 1 to 4, the connection strap 1331 is a hanging strap or a hanging rope, the ring connector 1341 is a hanging ring, and the hook connector 1221 is a hook. An end of the hanging strap is fixedly connected to the collection bag 131 and is located on the right side of a vertical center plane 126, and the other end of the hanging strap is connected to the hanging ring. The hook is disposed at the bottom of the suction cylinder 121, and the hook is a plastic hook integrally formed with the suction cylinder 121. When the handheld blower vacuum 100 is at the operating position, the hanging strap goes around the top end of the suction cylinder 121, and the hanging ring is hooked onto the hook. The hook and the suction cylinder 121 jointly provide a support force to suspend and raise the collection bag 131, thereby keeping the collection bag 131 away from the ground.

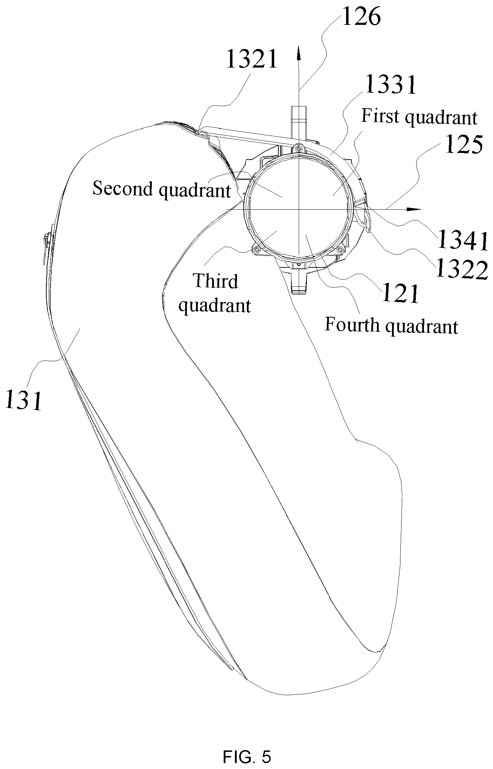

FIG. 5 is a front view of another handheld blower vacuum according to an example of the present application. The parts in the examples shown in FIGS. 1 to 4 that are compatible with this example can all be applied to this example, and the same parts are not repeated. Only the differences between this example and the examples in FIGS. 1 to 4 are introduced below. In the example shown in FIG. 5, the hook connector 1221 is mounted on the suction cylinder 121 via a fixing member, and the hook connector 1221 is fixed on the left side surface of the region below the horizontal center plane 125 of the suction cylinder 121.

The pipe assembly 120 further includes the vertical center plane 126 extending in the vertical direction (that is, the up and down direction), the central axis 123 is located in the vertical center plane 126, the horizontal center plane 125 and the vertical center plane 126 are perpendicular to each other, and the vertical center plane 126 divides the pipe assembly 120 into a left part and a right part. The bag connecting portion 132 includes a first end 1321 and a second end 1322, the first end 1321 is connected to the collection bag 131, and the second end 1322 is connected to the mounting portion 122. Specifically, the end of the connection strap 1331 connected to the collection bag 131 is the first end 1321, and the end of the ring connector 1341 connected to the hook connector 1221 is the second end 1322. It may also be understood as that the first end 1321 is the connection point between the bag connecting portion 132 and the collection bag 131, and the second end 1322 is the suspension point between the bag connecting portion 132 and the suction cylinder 121. For example, the first end 1321 and the second end 1322 are located on two sides of the vertical center plane 126, respectively. As shown in FIG. 5, the first end 1321 is located on the right side of the vertical center plane 126, and the second end 1322 is located on the left side of the vertical center plane 126. The first end 1321 and the second end 1322 of the bag connecting portion 132 are disposed on two sides of the vertical center plane 126, respectively so that the stress transfer effect of the suspension is good, and the suspension point between the second end 1322 and the suction cylinder 121 is adjacent to the user side, which is ergonomic and convenient for the user to complete the installation and disassembly of the bag connecting portion 132 and the mounting portion 122 with one hand. In another example, the first end 1321 and the second end 1322 may be located on the same side of the vertical center plane 126. For example, the first end 1321 and the second end 1322 are both located on the right side of the vertical center plane 126.

As shown in FIG. 5, from the perspective of the front view, in the cross section of the horizontal center plane 125 and the vertical center plane 126, the plane rectangular coordinate system with the central axis 123 as the origin may divide the circumference of the suction cylinder 121 into four quadrants, the first end 1321 may be located in the second quadrant or the third quadrant, and the second end 1322 may be located in the third quadrant or the fourth quadrant. In this example, the first end 1321 is located in the second quadrant, the second end 1322 is located in the fourth quadrant, and the bag connecting portion 132 is distributed around more than 1/3 of the circumference of the pipe assembly 120. For example, as shown in FIG. 5, the connection point between the connection strap 1331 and the collection bag 131 is located in the second quadrant, the suspension point between the ring connector 1341 and the hook connector 1221 is located in the fourth quadrant, and the connection point and the suspension point are distributed around more than 1/3 of the circumference of the suction cylinder 121. Alternatively, the first end 1321 is located in the second quadrant, the second end 1322 is located in the third quadrant, and the bag connecting portion 132 is distributed around more than 1/2 of the circumference of the pipe assembly 120. In another example, the bag connecting portion 132 is distributed around more than one, two, or multiple circumferences of the pipe assembly 120, that is, the connection strap 1331 may be wound around multiple circumferences of the suction cylinder 121 in the surrounding direction so that the connection strap 1331 and the suction cylinder 121 are more firmly connected, thereby providing a stable support force.

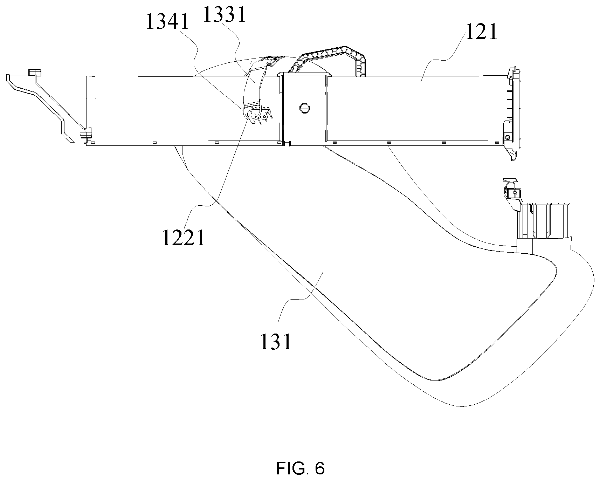

FIG. 6 is a side view of the handheld blower vacuum in FIG. 5. The parts in the examples shown in FIGS. 1 to 4 that are compatible with this example can all be applied to this example. Only the differences between this example and the examples in FIGS. 1 to 4 are introduced below. As shown in FIG. 6, the hanging strap is located on the right side of the vertical center plane 126, the hook is fastened to the suction cylinder 121 by the bolt, the hook is located on the left side surface of the vertical center plane 126, the hanging strap goes around the top end of the suction cylinder 121, the hanging ring is hooked onto the hook, and the collection bag 131 is suspended and raised, thereby keeping the collection bag 131 away from the ground. Moreover, the hook is a detachable component, which is convenient for the user to mount and disassemble and has better ergonomics.

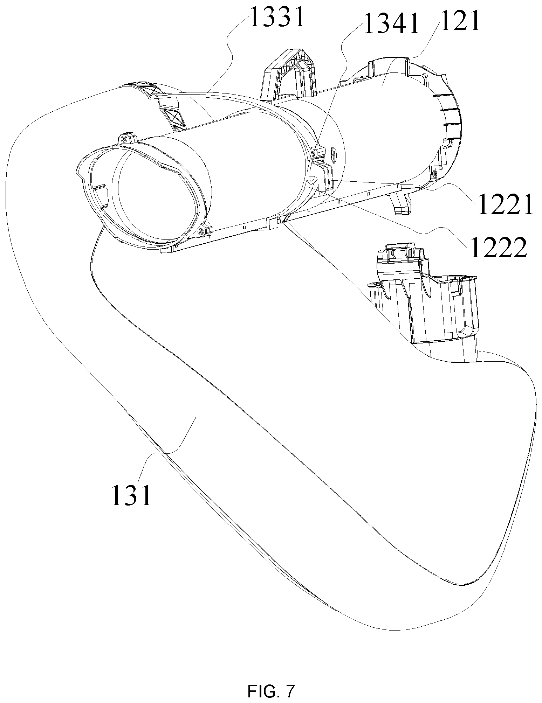

FIG. 7 is a structural view of another handheld blower vacuum according to an example of the present application. The parts in the examples shown in FIGS. 1 to 4 and the examples shown in FIGS. 5 and 6 that are compatible with this example can all be applied to this example. Only the differences between this example and the examples in FIGS. 1 to 4 and FIGS. 5 and 6 are introduced below. As shown in FIG. 7, the hook connector 1221 includes a support member 1222 and a hook. The support member 1222 is a clamp. The clamp is circular. The hook and the clamp are integrally formed. The hook is located in the region below the horizontal center plane 125 of the suction cylinder 121 and on the left side of the vertical center plane 126. The clamp is clamped on the suction cylinder 121 to form a surface contact, the hanging strap forms a surface contact with the suction cylinder 121, the hanging ring is hooked onto the hook of the clamp, and the suction cylinder 121 provides a support force to suspend the collection bag 131. In this example, the shape of the clamp may be a semicircle or an arc with a circumference greater than a semicircle, and the hook and the clamp may be detachably connected.

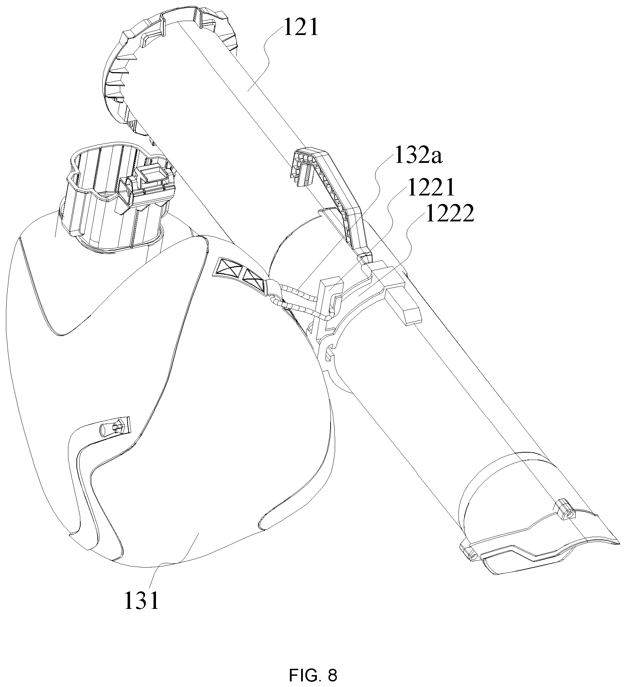

FIG. 8 is a structural view of another handheld blower vacuum according to an example of the present application. The parts in the examples shown in FIGS. 1 to 4, the examples shown in FIGS. 5 and 6, and the example shown in FIG. 7 that are compatible with this example can all be applied to this example. Only the differences between this example and the examples in FIGS. 1 to 4, FIGS. 5 and 6, and FIG. 7 are introduced below. As shown in FIG. 8, the bag connecting portion 132 includes a rope buckle 132a, an end of the rope buckle 132a is fixedly connected to the collection bag 131, the clamp is semicircular, and the clamp is clamped on the right side of the vertical center plane 126 of the suction cylinder 121. The suspension points between the clamp and the suction cylinder 121 include the top and bottom of the suction cylinder 121. The hook extends upward and is located on the right side of the vertical center plane 126 of the suction cylinder 121. The rope buckle 132a is hooked onto the hook to suspend the collection bag 131, thereby keeping the collection bag 131 away from the ground. In this example, the hook may extend upward to the left side of the vertical center plane 126. In an example, the clamp and the suction cylinder 121 may be integrally formed or fixedly connected. In this example, the collection bag 131 is suspended through the combination of the rope buckle 132a and the hook, and the structure is simple.

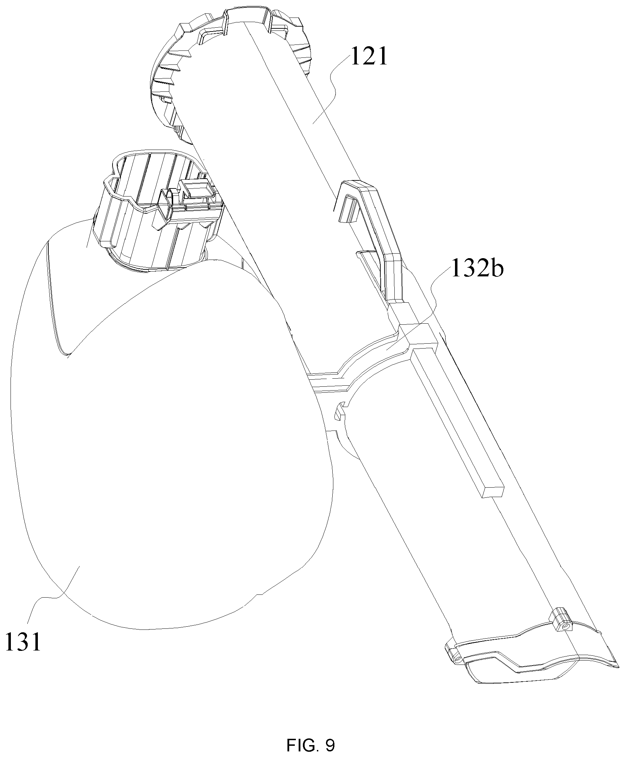

FIG. 9 is a structural view of another handheld blower vacuum according to an example of the present application. The parts in the examples shown in FIGS. 1 to 4, the examples shown in FIGS. 5 and 6, the example shown in FIG. 7, and the example shown in FIG. 8 that are compatible with this example can all be applied to this example. Only the differences between this example and the examples in FIGS. 1 to 4, FIGS. 5 and 6, FIG. 7, and FIG. 8 are introduced below. As shown in FIG. 9, the bag connecting portion 132 includes a clamping member 132b, the clamping member 132b includes a connecting portion and a clamping portion, the connecting portion is connected to the collection bag 131, and the shape of the clamping portion is a semicircle or an arc with a circumference greater than a semicircle. During operation, the clamping portion of the clamping member 132b is clamped on the suction cylinder 121, and the suspension points between the clamping portion and the suction cylinder 121 include the top, the side surface, and the bottom of the suction cylinder 121. In this example, the detachable connection between the collection bag 131 and the suction cylinder 121 is directly achieved through the clamping member 132b, thereby ensuring a simple structure and convenient user operation.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A handheld blower vacuum (100), comprising:
a body (110);
a pipe assembly (120) having a horizontal center plane (125); and
a bag assembly (130) detachably connected to the pipe assembly;
wherein the bag assembly comprises a collection bag (131) and a bag connecting portion (132) disposed on the collection bag, the pipe assembly is connected to or formed with a mounting portion (122), and the mounting portion is disposed in a region below the horizontal center plane of the pipe assembly, at least part of the bag connecting portion extends around the pipe assembly, goes around the top of the pipe assembly, and is detachably connected to the mounting portion.

2. The handheld blower vacuum of claim 1, wherein the bag connecting portion and the collection bag are integrally formed.

3. The handheld blower vacuum of claim 1, wherein the bag connecting portion and the collection bag are detachably connected.

4. The handheld blower vacuum of claim 1, wherein the mounting portion is disposed at a bottom of the pipe assembly.

5. The handheld blower vacuum of claim 1, wherein the mounting portion is disposed on a side surface of the pipe assembly.

6. The handheld blower vacuum of claim 1, wherein the pipe assembly is in contact with the bag connecting portion.

7. The handheld blower vacuum of claim 1, wherein the bag connecting portion comprises a first part (133) and a second part (134), the first part is connected to the collection bag, and the second part is connected to the mounting portion.

8. The handheld blower vacuum of claim 7, wherein the first part and the second part are detachably connected.

9. The handheld blower vacuum of claim 7, wherein the first part comprises a connection strap (1331), and the second part comprises a ring connector (1341).

10. The handheld blower vacuum of claim 1, wherein the mounting portion comprises a hook connector (1221).

11. The handheld blower vacuum of claim 1, wherein the bag connecting portion is distributed around more than 1/3 of a circumference of the pipe assembly.

12. The handheld blower vacuum of claim 1, wherein the bag connecting portion is distributed around more than 1/2 of a circumference of the pipe assembly.

13. The handheld blower vacuum of claim 1, wherein the bag connecting portion is distributed around more than a circumference of the pipe assembly.

14. The handheld blower vacuum of claim 1, wherein a capacity of the collection bag is greater than or equal to 40 L.

15. The handheld blower vacuum of claim 1, wherein when the handheld blower vacuum is at an operating position, a distance from a bottom of the collection bag to the ground is greater than or equal to 5 cm.
